# EUROPÄISCHE PATENTSCHRIFT

(11) **EP 1 054 222 B1**
(45) Veröffentlichungstag und Bekanntmachung des Hinweises auf die Patenterteilung: **19.01.2005**
(21) Anmeldenummer: 00108309.6
(22) Anmeldetag: 15.04.2000
(51) Int. Cl.: F25D 31/00, F25B 17/08

(54) **Vorrichtung und Verfahren zum Kühlen einer Flüssigkeit in einem Behälter**
Device and method for cooling a liquid in a receptacle
Dispositif et procédé pour refroidir un liquide dans un récipient

(30) Priorität: 19.05.1999 DE 19922848
(43) Veröffentlichungstag der Anmeldung: 22.11.2000
(73) Patentinhaber: ZEO-TECH Zeolith Technologie GmbH, 85716 Unterschleissheim (DE)
(72) Erfinder: Maier-Laxhuber, Peter, Dr., 85386 Dietersheim (DE); Becky, Andreas, 85521 Ottobrunn (DE); Richter, Gert, 85716 Unterschleissheim/Riedmoos (DE); Wörz, Reiner, Dipl.-Ing., 80992 München (DE)

(56) Entgegenhaltungen:
- DE-A- 3 425 419
- US-A- 4 993 239
- US-A- 5 088 302
- US-A- 5 440 896
- US-A- 5 816 069

## Beschreibung

Die Erfindung betrifft einen Flüssigkeitskühler und ein Verfahren zum Kühlen einer Flüssigkeit innerhalb eines Behälters mittels einer Sorptionsvorrichtung.

Sorptionsvorrichtungen sind Apparate, in denen ein flüssiges oder festes Sorptionsmittel ein zweites, höher siedenderes Mittel, das Arbeitsmittel dampfförmig unter Wärmefreisetzung sorbiert. Das Arbeitsmittel verdampft dabei in einem Verdampfer unter Wärmeaufnahme. Nachdem das Sorptionsmittel gesättigt ist, kann es durch Wärmezufuhr wieder desorbiert werden. Dabei dampft Arbeitsmittel aus dem Sorptionsmittel ab. Der Arbeitsmitteldampf kann rückverflüssigt werden und im Verdampfer anschließend erneut verdampfen.

Sorptionsvorrichtungen zum Kühlen mit festen Sorptionsmitteln sind aus der EP 0 368 111 und der DE-OS 34 25 419 bekannt. Sorptionsmittelbehälter, gefüllt mit Sorptionsmitteln saugen dabei Arbeitsmitteldampf, welcher in einem Verdampfer entsteht, ab und sorbieren ihn in der Sorptionsmittelfüllung unter Wärmefreisetzung. Die Sorptionswärme muß dabei aus der Sorptionsmittelfüllung abgeführt werden. Die Kühlapparate können zum Kühlen und Warmhalten von Lebensmitteln in thermisch isolierten Boxen eingesetzt werden.

Das aus der EP 0 368 111 bekannte Sorptionskühlsystem besteht aus einer transportablen Kühleinheit und einer davon separierbaren stationären Ladestation. Die Kühleinheit besteht aus einem Adsorptionsbehälter, gefüllt mit einem festen Sorptionmittel und einem Verdampfer, der flüssiges Arbeitsmittel und einen darin eingebetteten Wärmetauscher enthält. Verdampfer und Adsorptionsbehälter sind über eine absperrbare Dampfleitung miteinander verbunden. Durch einen im Verdampfer eingebetteten Wärmetauscher fließen flüssige Medien, die durch temperaturgeregeltes Öffnen und Schließen der Absperreinrichtung auf das gewünschte Temperaturniveau gekühlt werden. Nachdem das Sorptionsmittel mit Arbeitsmittel gesättigt ist, kann es in einer Ladestation erhitzt werden. Der dabei abströmende Arbeitsmitteldampf wird im Verdampfer rückverflüssigt. Die Kondensationswärme wird dabei durch Kühlwasser, das durch den eingebetteten Wärmetauscher strömen muß, abgeführt.
Das Sorptionskühlsystem ist wegen des eingebetteten Wärmetauschers und der Temperaturregelung aufwendig in der Herstellung und in der praktischen Verwendung für den nicht eingewiesen Laien kompliziert.

Dokument US-A-5 816 069 offenbart einen Flüssigkeitskühler gemäß dem Oberbegriff der Ausprüche 1 und 2.

Aufgabe der Erfindung ist es, eine gegenüber dem Stand der Technik einfachere Handhabung und eine billigere Vorrichtung aufzuzeigen.

Gelöst wird diese Aufgabe durch die kennzeichnenden Merkmale der Ansprüche 1, 2 und 9. Die abhängigen Ansprüche zeigen weitere erfinderische Verfahrensschritte und Vorrichtungen auf.

Ein erfmdungsgemäßer Sorptionsapparat enthält demnach ein Sorptionsmittel innerhalb eines Sorptionsmittelbehälters, eine absperrbare Dampfleitung und ein flüssiges Arbeitsmittel innerhalb eines Verdampfers. Der Verdampfer befindet sich in gutem thermischen Kontakt zu einer Flüssigkeit, die in einem Behälter enthalten ist. Die Bauteile sind fest miteinander verbunden und bleiben dies auch während aller Verfahrensschritte.

Während der Regenerationsphase wird das Sorptionsmittel erhitzt und Arbeitsmitteldampf desorbiert. Dieser strömt durch die absperrbare Dampfleitung zum Verdampfer und kondensiert dort aus. Die Kondensationswärme wird von der Flüssigkeit im Behälter unter Temperaturerhöhung aufgenommen. Am Ende der Regeneration wird die Wärmezufuhr in das Sorptionsmittel unterbrochen. Die Desorption von weiterem Arbeitsmitteldampf endet damit. Das desorbierte Arbeitsmittel befindet sich in flüssiger Form im Verdampfer. Die Dampfleitung ist abgesperrt. Das Sorptionsmittel kühlt sich bis auf Umgebungstemperatur durch Wärmeabgabe über die Wände des Sorptionsmittelbehälters ab.

Zur Einleitung der Kühlphase wird die abgesperrte Dampfleitung geöffnet. Arbeitsmitteldampf kann nunmehr vom Verdampfer in den Sorptionsmittelbehälter strömen und vom Sorptionsmittel exotherm sorbiert werden. Die dampfende Arbeitsmittelmenge im Verdampfer kühlt sich und die es umgebende Flüssigkeit ab. Um in kurzer Zeit die maximale Kältemenge zu erzeugen, muß das Sorptionsmittel aktiv gekühlt werden. Eine besonders intensive Kühlwirkung erreicht man, wenn der Sorptionsbehälter von einer ausreichend großen, die Sorptionswärme aufnehmenden Wassermasse umgeben ist oder eine kleinere Wassermenge unter Wärmeaufnahme von der Sorptionsmittelbehälterwand verdunsten kann. Vorteilhaft sollten die Behälterwände auf Temperaturen von weniger als 50°C gekühlt werden. Im Verdampfer sind dann ausreichend tiefe Temperaturen möglich.

Gekühlt wird erfindungsgemäß nur das Flüssigkeitsvolumen, das sich um und unterhalb des Verdampfer befindet. Das obere Flüssigkeitsvolumen bleibt wegen der niedrigeren Dichte und der geringen Wärmeleitung von Flüssigkeiten nahe der Ausgangstemperatur. Durch geeignete Positionierung und Gestaltung des Verdampfers kann das zu kühlende Flüssigkeitsvolumen vorgewählt werden. In der Praxis erreicht man dadurch eine schnellere Abkühlung der unteren Flüssigkeitsmenge, die dann zuerst entnommen wird. Die obere Flüssigkeitsmenge wird erst gekühlt, wenn sie durch Zapfen der gekühlten Menge in den Bereich des Verdampfers absinkt.

Vor dem Neubefüllen eines Behälters wird er in der Regel gereinigt. Hierzu wird Reinigungs- und Spülflüssigkeit in den Behälter geleitet und in der Regel bei gekipptem Behälter wieder abgelassen. Der Verdampfer ist deshalb so gestaltet, daß der Behälter bei allen Reinigungsverfahren problemlos und ohne Spülmittelrückstände leerlaufen kann. Die Verdampferwände, die mit der Flüssigkeit in Kontakt stehen sind glatt und ohne Rückhaltevertiefungen. Bewährt haben sich linsenförmige und zylindrische Geometrien.

Der Verdampfer-Innenraum sollte so gestaltet sein, daß die beim Verdampfen abnehmende, wässerige Füllung möglichst lange die gesamte Wandfläche benetzt um die gesamte Wärmetauscherfläche zu nutzen. Erfindungsgemäß werden hierfür Rückhaltemittel wie hygroskopische Oberflächenbeschichtungen oder schalenförmige Einbauten benutzt.

Besonders vorteilhaft ist die Verwendung des Adsorptionsstoffpaares Zeolith/Wasser. Zeolith ist ein kristallines Mineral, das aus einer regelmäßigen Gerüststruktur aus Silizium- und Aluminiumoxiden besteht. Diese Gerüststruktur enthält kleine Hohlräume, in welchen Wassermoleküle unter Wärmefreisetzung adsorbiert werden können. Innerhalb der Gerüststruktur sind die Wassermoleküie starken Feldkräften ausgesetzt, welche die Moleküle im Gitter verflüssigen und in einer flüssigkeitsähnlichen Phase binden. Die Stärke der auf die Wassermoleküle einwirkenden Bindungskräfte ist abhängig von der bereits in der Gerüststruktur enthaltenen Wassermenge und der Temperatur des Zeolithen. Für den praktischen Gebrauch können pro 100 Gramm Zeolith bis zu 25 Gramm Wasser sorbiert werden. Die dabei erzeugbare Kältemenge reicht aus um 1 Liter Wasser um 14 Kelvin abzukühlen. Zeolithe sind feste Stoffe ohne störende Wärmeausdehung bei der Sorptions- bzw. Desorptionsreaktion. Die Gerüststruktur ist von allen Seiten für die Wasserdampfmoleküle frei zugänglich. Die Apparate sind deshalb in jeder Lage einsatzfähig.
Die Verwendung von Wasser als Arbeitsmittel gestattet es, den erforderlichen Regelungsaufwand auf ein Minimum zu reduzieren. Beim Verdampfen von Wasser unter Vakuum kühlt sich die Wasseroberfläche auf 0°C ab und gefriert bei fortgesetzter Verdampfung zu Eis. Diese Eisschicht wächst schnell bis der entstehende Druckabfall durch die Eisschicht das Wachstum stoppt. Die Eisschicht kann vorteilhaft zur Regelung der Flüssigkeitstemperatur benutzt werden. Bei geringer Wärmezufuhr wächst die Eisschicht, bei sehr großer Wärmezufuhr schmilzt sie ab. Durch die natürliche Eisbildung wird die Wärmeübertragung von der Flüssigkeit in den Verdampfer reduziert, so daß die Flüssigkeit nicht unter 0°C abkühlt und im Regelfall bei 4 bis 5°C verbleibt.
Dem wässerigen Verdampferinhalt können auch den Gefrierpunkt absenkende Stoffe beigemischt sein, wenn die Zapftemperatur der Flüssigkeit unter 4°C abgesenkt werden oder ein Vereisen der Verdampferfüllung verhindert werden soll.

Verwendbar sind jedoch auch andere Sorptionsmittelpaarungen, bei denen das Sorptionsmittel fest ist und auch bei der Sorptionsreaktion fest bleibt. Feste Sorptionsmittel haben eine geringe Wärmeleitung und einen schlechten Wärmeübergang. Da auch der Wärmeübergang von gasförmigen Medien (Luft, Abgase) auf den Sorptionsmittelbehälter in der gleichen Größenordnung liegt, empfehlen sich prinzipiell Wärmetauscher ohne Berippung, wie beispielsweise Platten, Rohre oder auch Wellschläuche. Einige feste Sorptionsmittel, wie Zeolithe, sind stabil genug um auch äußere Überdrücke auf dünnwandigen Wärmetauscherflächen zu kompensieren. Zusätzliche Versteifungen oder dickwandige Wärmetauscherflächen sind deshalb nicht nötig. Da bei der Verwendung von Wasser als Arbeitsmittel der Sorptionsapparat unter Vakuum steht und für die gesamte Funktionsdauer keine Gase in das System eindringen sollten, sind für die Absperrvorrichtung die bekannten vakuumdichten Bauteile zu bevorzugen. Für die manuelle Betätigung haben sich Durchführungen, die mittels Metallbälgen abgedichtet sind, besonders bewährt.

Der sich bei der exothermen Sorptionsreaktion erhitzende Sorptionbehälter sollte möglichst vom Behälter thermisch entkoppelt angeordnet werden, um eine Wiedererwärmung der Flüssigkeit zu vermeiden. Vorteilhaft kann der Sorptionsmittelbehälter unterhalb des Behälters oder oberhalb des Behälters angeordnet sein. Im ersten Fall kann er durch Eintauchen in ein mit Wasser gefülltes Becken gekühlt werden und zum Regenerieren auf eine elektrisch beheizte Heizplatte gestellt werden. Im zweiten Fall kann vom Sorptionsbehälter aufsteigende Warmluft nicht über den Behälter streichen und die bereits gekühlte Flüssigkeit wieder erwärmen.

Für eine wirtschaftliche Betriebsweise sind Sorptionsmitteltemperaturen von 200 bis 300°C bei der Regeneration und von 40 bis 80°C bei der Sorption empfehlenswert. Da insbesondere Zeolithgranulate eine geringe Wärmeleitung haben, sind die Sorptionsbehälter so auszulegen, daß der Wärmeleitungsweg für die umgesetzten Wärmemengen ca. 3 cm nicht übersteigt. Als Wärmequellen für die Regeneration sind alle bekannten Vorrichtungen geeignet, die das erforderliche Temperaturniveau erreichen und die Flüssigkeit im Behälter nicht unnötig erwärmen. Vorteilhaft sind elektrisch beheizte Platten oder Patronen, die der Geometrie der Sorptionsmittelbehälter angepaßt sind. Die Heizung kann z. B. auch für mehrere Flüssigkeitskühler in einer Palette angeordnet sein, um produktionsbedingte Lagerzeiten nach dem Befüllen der Behälter für die Regeneration zu nutzen. Vorteilhaft sind auch Heizvorrichtungen, die über Strahlungs- oder Induktionswärme (Wirbelströme) die Sorptionsmittelfüllung erhitzen. Selbstverständlich ist es auch möglich, die Heizvorrichtung mit dem Sorptionsbehälter dauerhaft zu verbinden und auch beim Transport mobiler Flüssigkeitskühler an diesem zu belassen.

Vorteilhaft kann es auch sein, die Geometrie des Sorptionsmittelbehälters für die Wärmeabgabe während der Sorptionsphase zu optimieren. Für den Fall der Wärmeabgabe an die Umgebungsluft sind große, strömungsgünstige Wärmetauscherflächen zu bevorzugen, während für den Fall der Verdunstungs- bzw. Wasserkühlung Aufnahmebekken oder Wasser speichernde Oberflächenbeläge (z. B. werbewirksame Papierbanderolen) nützlich sind.

An Größe und Geometrie der Behälter werden keine besonderen Anforderungen gestellt. Somit sind alle heute üblichen Behältnisse (z. B. Fässer, Container, Dosen, offene Behälter, Foliensäcke, Mehrschichtverpackungen, Kunststoffbehälter, Kanister, Hoboks, Flaschen, Kannen usw.) für fließfähige Füllgüter geeignet, sofern sich der Sorptionsapparat funktionsgerecht ankoppeln läßt.

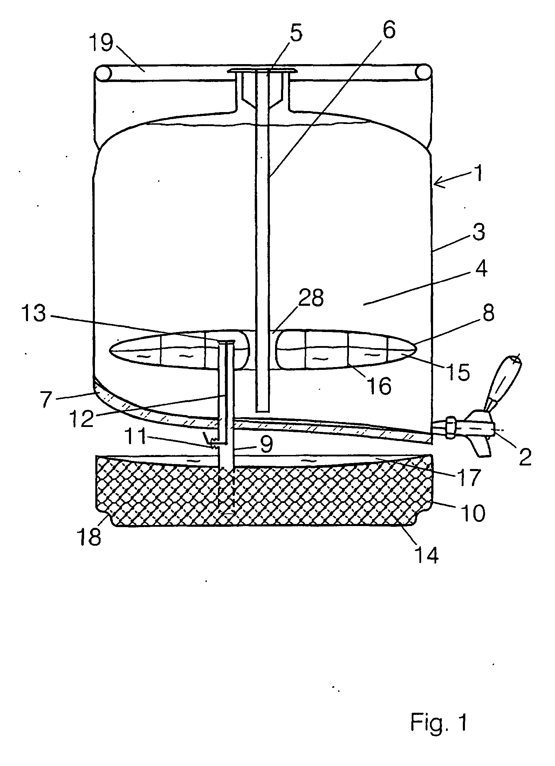

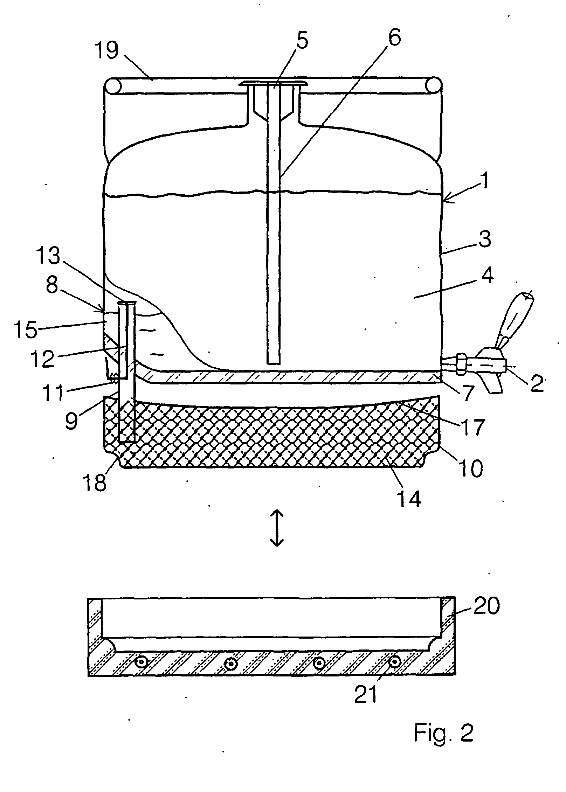

In den Figuren 1 und 2 sind zwei erfindungsgemäße Flüssigkeitskühler dargestellt. Es zeigt:
Fig. 1 einen Flüssigkeitskühler in geschnittener Darstellung,
Fig. 2 einen Flüssigkeitskühler analog zu Fig. 1 mit einem ringförmigen Verdampfer und
Fig. 3 einen Flüssigkeitskühler mit oben angeordnetem Sorptionsmittelbehälter, ebenfalls in geschnittener Darstellung.
Die Ausbildung des Verdampfers in Figur 3 fällt nicht unter die Ausprüche.

In den Figuren 1 und 2 ist jeweils ein erfindungsgemäßer Flüssigkeitskühler 1 dargestellt. Im unteren Auslauf der Behälter 3 befinden sich Zapfhähne 2 über die die in den Behältern 3 befindlichen Getränke 4 gekühlt entnommen werden können. Die Behälter 3 haben im oberen Bereich einen Fitting 5 mit einem bis zum Behälterboden reichenden Steigrohr 6. Über Fitting 5 und Steigrohr 6 wird das Getränkefaß nach den bekannten Methoden gereinigt und gefüllt, ohne daß dabei der Sorptionsapparat besonderer Beachtung bedarf. Auf die Böden der Behälter 3 ist eine thermische Isolation 7 aufgetragen, die eine Wiedererwärmung der gekühlten Getränke verhindert. Die Verdampfer 8, mit wässerigen Arbeitsmitteln 15, sind innerhalb der Behälter 3 angeordnet. Von diesen führt jeweils eine absperrbare Dampfleitung 9 zu den außerhalb der Behälter 3 befindlichen Sorptionsmittelbehältern 10, die mit granuliertem Zeolith-Sorptionsmittel 14 gefüllt sind. Die absperrbaren Dampfleitungen 9 enthalten je einen Metallbalg 11, über den ein manuell betätigbares Gestänge 12 einen Ventilteller 13 am Ende der Dampfleitung 9 im Verdampfer 8 öffnen und schließen kann. Das Gestänge 12 ist dabei so eingestellt, daß bei nicht ausgelenktem Metallbalg 11 der Ventilteller 13 auf die Öffnung der Dampfleitung 9 gezogen wird. Eine Rückströmung von Wasserdampf aus dem Verdampfer 8 in den Sorptionsmittelbehälter 10 ist solange unterbunden, bis der Metallbalg 11 ausgelenkt und der Ventilteller 13 abgehoben werden. Während der Regenerationsphase, in der Wasserdampf in den Verdampfer 8 zurückströmt, gibt der Ventilteller 13 der Dampfströmung selbsttätig den Weg frei.

Der Flüssigkeitskühler 1 gemäß Fig. 1 enthält einen linsenförmigen Verdampfer 8 im unteren Drittel des Behälters 3. Der Verdampfer 8 ist etwa zur Hälfte mit Wasser (flüssiges Arbeitsmittel 15) gefüllt. In der Mitte des Verdampfers ist eine Durchdringung 28 ausgebildet, durch welche das Steigrohr 6 bis zum Behälterboden reicht. Die Durchdringung 28 läßt zum Steigrohr 6 genügend Abstand um beim Reinigungsprozeß eine ausreichende Spülmittelströmung zu gewährleisten. Gegen den Überdruck des Getränkes 4 sind im Verdampfer 8 Stabilisierungs- und Wärmeleitrippen 16 aus Kupfer eingezogen. Über die Wärmeleitfunktion wird auch die nicht mit Wasser benetzte obere Verdampferhälfte gekühlt. Auf diese Weise steht die gesamte Verdampferoberfläche als Kühlfläche für das Getränk 4 zur Verfügung. Dieses wird während der Kühlphase nur unterhalb und seitlich des Verdampfers 8 gekühlt. Die obere Füllung des Fasses bleibt solange ungekühlt bis sie in den Bereich des Verdampfers 8 durch Zapfen der gekühlten Füllung über den Zapfhahn 2 absinkt.
Der Sorptionsbehälter 10 hat auf seiner dem Faß zugekehrten Seite eine mit Wasser gefüllte Mulde 17. Die Wassermenge kann die Sorptionswärme aus dem Sorptionsmittel 14 abführen. Die Unterseite des Sorptionsmittelbehälters 10 enthält eine umlaufende Einbuchtung 18 mit welcher der Flüssigkeitskühler 1 beim Stapeln in den oberen Spundring 19 eines zweiten Fasses gestellt werden kann.

Der Füssigkeitskühler 1 nach Fig. 2 unterscheidet sich gegenüber dem Kühler gemäß Fig. 1 nur im Aufbau des Verdampfers 8. Dieser ist hier in die untere Behälterwand ringförmig integriert. Auch diese Verdampferform kann zusätzliche Wärmeleitrippen aufweisen. Gegenüber der Version aus Fig. 1 läßt sich diese Bauart einfacher reinigen. Unter dem Sorptionsbehälter 10 ist eine ebenfalls geschnitten dargestellte Heizplatte 20 mit elektrischen Heizelementen 21 aufgezeigt. Auf sie wird zum Regenerieren der Flüssigkeitskühler 1 gestellt und das Sorptionsmittel 14 erhitzt.

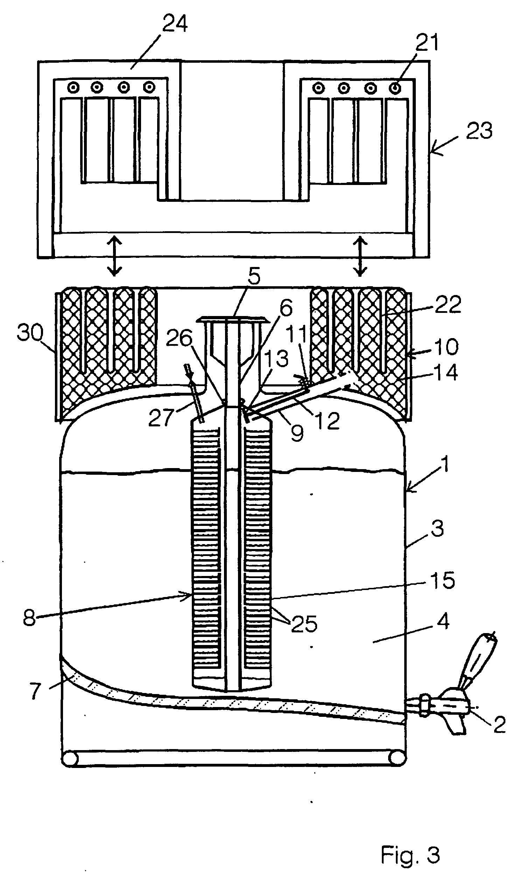

Der Flüssigkeitskühler 1 gemäß Fig. 3 hat einen oberhalb des Behälters 3 angeordneten Sorptionsbehälter 10. Dieser ist ringförmig um den Fitting 5 angeordnet und mit ringförmigen Rückhaltemitteln 22 versehen. In diese wird eine, ebenfalls mit elektrischen Heizelementen 21 und einer Isolierhülle 24 ausgestattete Heizhaube 23 während der Regenerierphase gesteckt. Das Sorptionsmittel 14 kann durch diese Geometrie schnell erhitzt werden, da durch die Rückhaltemittel 22 zugleich der Wärmeleitweg innerhalb des Sorptionsmittelbehälters 10 verkürzt ist. Während des Sorptionsprozesses sind die Rückhaltemittel 22 mit Wasser gefüllt. Dieses Wasser und weiteres Wasser, das auf eine um den Sorptionsmittelbehälter 10 gewickelte Banderole 30 gelangt, führt die Sorptionswärme durch Verdunsten ab.
Der Verdampfer 8 hat eine zylindrische Form und ist vertikal in der Mitte des Fasses angeordnet. Das Steigrohr 6 ist geteilt und im unteren Bereich zugleich Teil der Hülle des Verdampfers 8. Im oberen Teil ist das Steigrohr 6 über ein Dichtungselement 26 an den Verdampfer aufsteckbar. Bei dieser Verdampferversion wird somit das Getränk 4, falls es über das Steigrohr 6 und den Fitting 5 gezapft wird, beim Durchströmen des Steigrohres 6 zusätzlich gekühlt. Der Verdampfer 8 selbst enthält im Innenbereich Kupferschalen 25 auf denen das wässerige Arbeitsmittel 15 über die gesamte Verdampferhülle verteilt ist. Zwischen dem unteren Steigrohrteil und den Kupferschalen 25 ist ein Strömungsweg für den Wasserdampf ausgespart.

Alle in der Zeichnung dargestellten Verdampfer- und Sorptionsmittelbehälter-Bauarten sind miteinander kombinierbar und auf allen heute üblichen Reinigungs- und Befüllanlagen einsetzbar.

Erfindungsgemäß werden die Flüssigkeitskühler 1 nach dem Neubefüllen mit Getränken durch Anlegen der Heizvorrichtungen regeneriert. Der beim Erhitzen des Sorptionsmittels 14 desorbierte Wasserdampf strömt durch den sich öffnenden Ventilteller 13 in den Verdampfer 8 und kondensiert an den Wänden. Die Getränke nehmen die Kondensationwärme auf und erwärmen sich. Die Erwärmung ist etwa so groß wie die später folgende Abkühlung, in der Regel also ca. 20 bis 25 Kelvin.
Bier wird beispielsweise bei relativ niedrigen Temperaturen von 4 bis 5°C abgefüllt. Die anschließende Erwärmung durch den Regenerationsprozeß entspricht also der ohnehin folgenden Erwärmung auf die Umgebungstemperatur.

Zum Starten des Sorptionsprozesses wird das Gestänge 12 ausgelenkt und festgesetzt. Vom Verdampfer 8 strömt Wassserdampf zur Sorptionsmittelfüllung 14. Die Getränke kühlen sich an den Verdampferaußenflächen ab. Die Abkühlraten der Getränke 4 liegen bei ca. 1 K/min, d.h. etwa 20 Minuten nach dem Öffnen der Ventiltellers 13 kann das erste Getränk mit ca. 5 °C gezapft werden. Die gesamte Getränkefüllung läßt sich innerhalb von 2 Stunden gekühlt zapfen.

## Patentansprüche

1. Flüssigkeitskühler mit einem Sorptionsmittel (14) innerhalb eines Sorptionsmittelbehälters (10), der über eine absperrbare Dampfleitung (9) an einen Verdampfer (8) für die Verdampfung und Verflüssigung von Arbeitsmitteldampf verbunden ist, und einem Behälter (3), an den der Verdampfer (8) gekoppelt ist und der eine Flüssigkeit (4) aufnehmen kann, die über den Verdampfer (8) gekühlt wird und die während der Regeneration die Kondensationswärme aufnimmt,
**dadurch gekennzeichnet, daß** der Verdampfer (8) in die untere Behälterwand ringförmig integriert ist, so daß nur jeweils ein Teil des Behältervolumen gekühlt wird und die Flüssigkeit (4) im restlichen Behälterteil weitgehend ungekühlt bleibt.

2. Flüssigkeitskühler mit einem Sorptionsmittel (14) innerhalb eines Sorptionsmittelbehälters (10), der über eine absperrbare Dampfleitung (9) an einen Verdampfer (8) für die Verdampfung und Verflüssigung von Arbeitsmitteldampf verbunden ist, und einem Behälter (3), an den der Verdampfer (8) gekoppelt ist und der eine Flüssigkeit (4) aufnehmen kann, die über den Verdampfer (8) gekühlt wird und die während der Regeneration die Kondensationswärme aufnimmt,
**dadurch gekennzeichnet, daß** der Flüssigkeitskühler (1) einen linsenförmigen Verdampfer (8) im unteren Teil des Behälters (3) enthält, so daß nur jeweils ein Teil des Behältervolumen gekühlt wird und die Flüssigkeit (4) im restlichen Behälterteil weitgehend ungekühlt bleibt.

3. Flüssigkeitskühler nach einem der Ansprüche 1 oder 2,
**dadurch gekennzeichnet, daß**
der Sorptionsmittelbehälter (10) im Außenbereich Rückhaltemittel für wässerige Flüssigkeiten enthält, die zur Kühlung des Sorptionsmittels (14) dienen.

4. Flüssigkeitskühler nach einem der vorangehenden Ansprüche,
**dadurch gekennzeichnet, daß**
die absperrbare Dampfleitung (9) ein Rückschlagventil enthält, das den Arbeitsmitteldampf ungehindert vom Sorptionsmittel (14) zum Verdampfer (8) strömen läßt und das die entgegengesetzte Strömungsrichtung nur durch manuelles Öffnen frei gibt.

5. Flüssigkeitskühler nach einem der vorangehenden Ansprüche,
**dadurch gekennzeichnet, daß**
der Verdampfer (8) über Einbauten (16) verfügt, die das flüssige Arbeitsmittel (15) auf die Oberfläche des Verdampfers (8) verteilen und einen ungehinderten Strömungsweg für den abströmenden Arbeitsmitteldampf bilden.

6. Flüssigkeitskühler nach einem der vorangehenden Ansprüche,
**dadurch gekennzeichnet, daß**
der Verdampfer (8) in seiner mit der Flüssigkeit (4) in Kontakt stehender Außenhülle so ausgeformt ist, daß die Flüssigkeit (4) bei jeder Stellung des Behälters (3) rückstandsfrei entleert werden kann.

7. Flüssigkeitskühler nach einem der vorangehenden Ansprüche,
**dadurch gekennzeichnet, daß**
im Verdampfer (8) eine verschließbare Absaugleitung (27) mündet, durch die der Sorptionsmittelbehälter (10) evakuiert werden kann.

8. Flüssigkeitskühler nach einem der vorangehenden Ansprüche,
**dadurch gekennzeichnet, daß**
der Behälter (3) im unteren Bereich eine thermische Isolierung (7) gegen Erwärmung von außen enthält.

9. Verfahren zum Abkühlen einer Flüssigkeit (4) mittels eines Flüssigkeitskühlers (1) nach einem der vorangehenden Ansprüche, der durch das Sorptionsmittel (14) aus dem Verdampfer (8), der mit der zu kühlenden Flüssigkeit (4) in thermischem Kontakt steht, Arbeitsmitteldampf absaugt, wobei
beim Regenerieren des Sorptionsmittels (14) der Arbeitsmitteldampf in den Verdampfer (8) zurückströmt und beim Kondensieren seine Kondensationswärme an eine Flüssigkeit (4) innerhalb des Behälters (3) abgibt.

10. Verfahren nach Anspruch 9,
**dadurch gekennzeichnet, daß**
die Flüssigkeit (4) im Behälter (3), welche die Kondensationswärme aufnimmt und die Flüssigkeit (4), welche im Anschluß daran gekühlt wird, identisch sind.

11. Verfahren nach einem der einem der Ansprüche 9 oder 10,
**dadurch gekennzeichnet, daß**
das Sorptionsmittel (14) während es den Arbeitsmitteldampf sorbiert, über die Wände des Sorptionsmittelbehälters (10) gekühlt wird.

12. Verfahren nach einem der vorangehenden Ansprüche 9-11,
**dadurch gekennzeichnet, daß**
die Kühlung des Sorptionsmittels (14) durch die Verdunstung einer wässerigen Flüssigkeit von der äußeren Oberfläche des Sorptionsmittelbehälters (10) erfolgt.

## Claims

1. Liquid cooler comprising a sorbent (14) within a sorbent container (10), which is connected via a vapour conduit (9), which can be sealed off, to an evaporator (8) for the evaporation and liquefaction of working agent vapour, and a container (3), to which the evaporator (8) is coupled and which can absorb a liquid (4) which is cooled via the evaporator (8) and which, during the regeneration, absorbs the condensation heat, **characterised in that** the evaporator (8) is annularly integrated into the lower container wall, **in that** only part of the container volume is cooled in each case and the liquid (4) in the remaining part of the container remains substantially uncooled.

2. Liquid cooler comprising a sorbent (14) within a sorbent container (10), which is connected via a vapour conduit (9), which can be sealed off, to an evaporator (8) for the evaporation and liquefaction of working agent vapour, and a container (3), to which the evaporator (8) is coupled and which can receive a liquid (4), which is cooled via the evaporator (8) and which, during the regeneration, absorbs the condensation heat, **characterised in that** the liquid cooler (1) contains a lens-shaped evaporator (8) in the lower part of the container (3), so only a part of the container volume is cooled, in each case, and the liquid (4) in the remaining part of the container remains substantially uncooled.

3. Liquid cooler according to either of claims 1 or 2, **characterised in that** the sorbent container (10) contains retention means in the outer for aqueous liquids, which are used to cool the sorbent (14).

4. Liquid cooler according to any one of the preceding claims, **characterised in that** the vapour conduit (9) which can be sealed off, contains a check valve which allows the working agent vapour to flow unhindered from the sorbent (14) to the evaporator (8) and which releases the counterflow direction only by manual opening.

5. Liquid cooler according to any one of the preceding claims, **characterised in that** the evaporator (8) has components (16) which distribute the liquid working agent (15) over the surface of the evaporator (8) and form an unhindered flow path for the working agent vapour flowing away.

6. Liquid cooler according to any one of the preceding claims, **characterised in that** the evaporator (8) in its outside cover, which is in contact with the liquid (4), is formed such that the liquid (4) can be emptied without any residue in any position of the container (3).

7. Liquid cooler according to any one of the preceding claims, **characterised in that** a sealable suction line (27), through which the sorbent container (10) can be evacuated, opens in the evaporator (8).

8. Liquid cooler according to any one of the preceding claims, **characterised in that** the container (3), in the lower area, contains thermal insulation (7) against heating from the outside.

9. Method for cooling a liquid (4) by means of a liquid cooler (1) according to any one of the preceding claims, which, owing to the sorbent (14), extracts working agent vapour from the evaporator (8), which is in thermal contact with the liquid (4) to be cooled, wherein, during regeneration of the sorbent (14), the working agent vapour flows back into the evaporator (8) and, on condensing, releases its condensation heat to a liquid (4) within the container (3).

10. Method according to claim 9, **characterised in that** the liquid (4) in the container (3), which absorbs the condensation heat and the liquid (4), which is then cooled, are identical.

11. Method according to either of claims 9 or 10, **characterised in that** the sorbent (14), while it absorbs the working agent vapour, is cooled via the walls of the sorbent container (10).

12. Method according to any one of the preceding claims 9 to 11, **characterised in that** the sorbent (14) is cooled by the evaporation of an aqueous liquid from the outer surface of the sorbent container (10).

## Revendications

1. Refroidisseur de liquides muni d'un sorbant (14) à l'intérieur d'un récipient à sorbant (10) qui est relié au moyen d'une conduite de vapeur (9) à un évaporateur (8) destiné à faire s'évaporer et à liquéfier de la vapeur de substance active et muni d'un récipient (3) couplé à l'évaporateur (8) et susceptible de recevoir un liquide (4) qui est refroidi au moyen de l'évaporateur (8) et qui reçoit la chaleur de condensation pendant la régénération,
**caractérisé en ce que** l'évaporateur (8) est intégré sous forme annulaire à la paroi inférieure du récipient de telle manière qu'à chaque fois. seule une partie du volume du récipient est refroidie et que le liquide (4) reste en grande partie non refroidi dans la partie restante du récipient.

2. Refroidisseur de liquides muni d'un sorbant (14) à l'intérieur d'un récipient à sorbant (10) qui est relié au moyen d'une conduite de vapeur (9) à un évaporateur (8) destiné à faire s'évaporer et à liquéfier de la vapeur de substance active et muni d'un récipient (3) couplé à l'évaporateur (8) et susceptible de recevoir un liquide (4) qui est refroidi au moyen de l'évaporateur (8) et qui reçoit la chaleur de condensation pendant la régénération,
**caractérisé en ce que** le refroidisseur de liquides (1) contient un évaporateur (8) en forme de lentille dans la partie inférieure du récipient (3) de telle manière qu'à chaque fois seule une partie du volume du récipient est refroidie et que le liquide (4) reste en grande partie non refroidi dans la partie restante du récipient.

3. Refroidisseur de liquides selon l'une des revendications 1 ou 2, **caractérisé en ce que** dans la zone extérieure le récipient à sorbant (10) comprend des moyens de retenue destinés à des liquides aqueux et qui servent à refroidir le sorbant (14).

4. Refroidisseur de liquides selon l'une des revendications précédentes, **caractérisé en ce que** la conduite de vapeur (9) obturable comporte un clapet de non retour qui laisse s'écouler sans obstacle la vapeur de substance active depuis le sorbant (14) jusqu'à l'évaporateur (8) et qui ne dégage la direction opposée d'écoulement que par une ouverture manuelle.

5. Refroidisseur de liquides selon l'une des revendications précédentes, **caractérisé en ce que** l'évaporateur (8) possède des insertions (16) qui répartissent la substance active (15) liquide sur la surface de l'évaporateur (8) et qui forment un trajet sans obstacle pour la vapeur de substance active qui s'écoule.

6. Refroidisseur de liquides selon l'une des revendications précédentes, **caractérisé en ce que**, dans sa gaine extérieure en contact avec le liquide (4), l'évaporateur (8) est conçu de telle manière que le liquide (4) peut être vidé sans résidu dans n'importe quelle position du récipient (3).

7. Refroidisseur de liquides selon l'une des revendications précédentes, **caractérisé en ce que** dans l'évaporateur (8) débouche une conduite d'aspiration (27) verrouillable grâce à laquelle on peut vider le récipient à sorbant (10).

8. Refroidisseur de liquides selon l'une des revendications précédentes, **caractérisé en ce que** dans la zone inférieure le récipient (3) comporte une isolation thermique (7) contre la chaleur extérieure.

9. Procédé pour refroidir un liquide (4) à l'aide d'un refroidisseur de liquides (1) selon l'une des revendications précédentes qui aspire par le sorbant (14) la vapeur de substance active hors de l'évaporateur (8) qui est en contact thermique avec le liquide (4)à refroidir ; lors de la régénération du sorbant (14) la vapeur de substance active reflue dans l'évaporateur (8) et lors de la condensation sa chaleur de condensation est transmise à un liquide (4) à l'intérieur du récipient (3).

10. Procédé selon là revendication 9, **caractérisé en ce que** le liquide (4) situé dans le récipient (3) et qui absorbe la chaleur de condensation est identique au liquide (4) qui est refroidi par la suite.

11. Procédé selon l'une des revendications 9 ou 10, **caractérisé en ce que** le sorbant (14) est refroidi par les parois du récipient à sorbant (10) pendant qu'il adsorbe la vapeur de substance active.

12. Procédé selon l'une des revendications précédentes 9 à 11, **caractérisé en ce que** le refroidissement du sorbant (14) a lieu par évaporation d'un liquide aqueux sur la surface extérieure du récipient à sorbant (10).
